# EUROPEAN PATENT APPLICATION

(11) **EP 3 315 291 A1**
(43) Date of publication of application: **02.05.2018**
(21) Application number: 16196341.8
(22) Date of filing: 28.10.2016
(51) Int. Cl.: B29C 65/18, B65B 51/14, B65B 7/16, B65B 7/20, B65D 77/20, B29C 65/30, B29C 65/78

(54) **AN APPLICATOR TOOL FOR ATTACHING A MEMBRANE TO AN INNER SURFACE OF A SIDE WALL OF A CONTAINER AND A METHOD OF USE THEREOF**

(71) Applicant: Danapak Flexibles A/S, 4200 Slagelse (DK)
(72) Inventor: JENSEN, Ronnie Winther, 9320 Hjallerup (DK)
(74) Representative: Awapatent A/S

(57) **Abstract**

An applicator tool (10) for attaching a membrane (5) to an inner surface of a side wall (51) of a container (52) for a packaged dairy product, comprises a bottom part (1) with a bottom surface (11) for abutment against the membrane (5), said bottom surface (11) defining a bottom level, the bottom part (1) having a circumferential surface (13) adjacent to the bottom surface (11), the bottom surface (11) and the circumferential surface (13) together defining a convex surface (12a) circumscribed about the bottom surface (11) and the circumferential surface (13); and
a plurality of activating protrusions (34) respectively movable relative to the bottom part (1) between an active position in which the activating protrusions (34) protrude relative to the convex surface (12a) and an inactive position in which the activating protrusions (34) are retracted from their active positions.

## Description

The present invention relates to an applicator tool for attaching a membrane to an inner surface of a side wall of a container for a packaged dairy product.

The applicant's European patent application No. EP 15 199 255.9, not yet published, relates to packaging, specifically packaging of food products, more specifically dairy products, such as white cheese. Thereby a dairy product substance is introduced into a container through an open top and subsequently peripheral portions of a membrane are attached to the inner surface of the side wall of the container to suspend the membrane above the dairy product substance. For attaching the membrane to the inner surface of the side wall of the container an applicator tool is used, said tool having an applicator part shaped according to the shape of the membrane to be positioned in the container, and the applicator part guides the membrane into the container. The applicator part comprises heat points at positions where the membrane is to be spot-welded to the inner walls of the container. In use the applicator unit moves downwards until it abuts the membrane, and when the applicator part subsequently enters through the open top of the container, peripheral parts of the membrane are bent upwards to lie in parallel with respective sidewalls of the container to be spot-welded thereto.

DE-U1-201 10 390 discloses two different embodiments of an applicator tool with a piston with a lateral surface comprising a vacuum facility for cohering a cover to be applied to a container. In one embodiment an arm carrying a heat element is rotatable between a retracted position and a welding position below the piston. In another embodiment a heat element is present in a bottom surface of the piston.

US-A1-2004/0206048 discloses an apparatus for sealing a container by means of a lid attached to the inner surface of the side wall of the container. The apparatus comprises an applicator tool comprising a bottom surface with a vacuum facility for cohering a lid material to the bottom surface and a rigid annular sealing member surrounding the bottom surface.

The object of the present invention is to provide an alternative applicator tool suited for use in automated packaging. Preferably the applicator tool should be suited for use in automated packaging attaching 40 membranes to respective containers per minut.

This is obtained by an applicator tool for attaching a membrane to an inner surface of a side wall of a container for a packaged dairy product, comprising: a bottom part with a bottom surface for abutment against the membrane, said bottom surface defining a bottom level when the applicator tool is in a horizontal application position for attaching the membrane to the inner surface of the side wall of the container, the bottom part having a circumferential surface adjacent to the bottom surface, said circumferential surface having an extent in a direction perpendicular to the bottom surface and being positioned above said bottom level, when the applicator tool is in said application position, the bottom surface and the circumferential surface together defining a convex surface circumscribed about the bottom surface and the circumferential surface; and a plurality of activating protrusions respectively movable relative to the bottom part between an active position in which the activating protrusions protrude relative to the convex surface and an inactive position in which the activating protrusions are retracted from their active positions.

Hereby is obtained that the membrane may be attached to the inner surface of the side wall of the container by means of the activating protrusions, and that the activating protrusions may be removed from their active positions before the applicator tool is removed from the container thus minimizing a risk of the membrane cohering to the applicator tool, when the latter is removed.

The convex surface being circumscribed about the bottom surface and the circumferential surface, entails that the convex surface is circumscribed about a lower side of a lower portion of the bottom part.

In an embodiment the activating protrusions in their inactive positions are retracted to locations above locations of the activating protrusions in their active positions relative to the bottom part. Hereby a simple construction is facilitated.

In an embodiment, in the active position the activating protrusions are protruding less than 2 mm, or less than 1 mm, from the convex surface to allow the membrane generally to be in constant contact with the surface of the bottom part 1, especially with the bottom surface 11, to be supported thereby throughout a procedure of positioning the membrane for attachment and effecting the attachment proper, e.g. by spot-welding.

In an embodiment the activating protrusions are in their respective active position located above said bottom level when the applicator tool is in said application position. Such embodiment is particular suited for attaching the membrane to a substantially vertical part of the inner surface of the side wall of a container.

In an embodiment the activating protrusions are parts of an activating unit, which is movable relative to the bottom part in a direction perpendicular to said bottom surface. Hereby is obtained that moving the activating unit will move the activating protrusions, thus providing for a simple construction.

In an embodiment the applicator tool comprises a power means for effecting movement of the activating protrusions in at least one direction between their respective active position and their respective inactive position. Hereby is obtained that the activating protrusions may be moved more reliably between their active and inactive positions.

In an embodiment a power means for effecting movement of the activating protrusions in at least one direction between their respective active position and their respective inactive position is present between the activating unit and the bottom part for at least moving the activating unit away from the bottom part. The power means may be passive e.g. in the form of a spring, or it may be active e.g. in the form of a pneumatic cylinder, whereby the effect of the power means is controllable.

In a further embodiment the activating unit including the activating protrusion is substantially rigid. Hereby is obtained that the activating protrusions will move in parallel when the activating unit is moved relative to the bottom part. Using this embodiment with containers having an upwardly (slightly) diverging side wall entails that the pressure of the activating protrusions against the membrane is relieved when raising vertically the activating unit.

In an embodiment the circumferential surface is diverging in direction away from the bottom surface. Hereby is obtained that the circumferential surface may be parallel to the inner surface of the side wall of a container having a side wall that is upwardly diverging. Alternatively, the circumferential surface may extend substantially perpendicular to the bottom surface and the bottom level.

In an embodiment the applicator may comprise means for releasably cohering the membrane to the bottom surface. Hereby is obtained that the membrane may be positioned correctly in the container by means of the applicator tool due to the coherence with the bottom surface of the bottom part, and that the membrane may be attached to the inner surface of the side wall of the container by means of the activating protrusions while the membrane is still kept in place by the coherence with the bottom surface of the bottom part.

In an embodiment the means for releasably cohering the membrane to the bottom surface comprise at least one suction device, and in a further embodiment the at least one suction device comprises a connection for connecting a vacuum source. Hereby releasable coherence of the membrane to the bottom surface is obtained in a well-known manner.

In an embodiment the activating protrusions respectively comprise a heat surface for abutment against the membrane. Hereby is obtained that the membrane may be attached to the inner surface by hot-sealing or welding.

In a further embodiment the applicator tool comprises a heating element conducting heat to the heat surfaces of the activating protrusions. Hereby a simple construction is provided for.

In an embodiment the bottom part comprises a lateral protrusion adjacent the circumferential surface for abutment on an upper edge of the container. Hereby is in a simple manner obtained that the membrane is positioned precisely in the container and that the container is stabilized during attachment of the membrane.

The invention further relates to a method of attaching a membrane to an inner surface of a side wall of a container for a packaged dairy product by means of an applicator tool according to the invention, said method comprising: contacting a membrane with the bottom surface of the bottom part; inserting the membrane into the container to a position between the inner surface of the side wall of the container; pressing circumferential parts of the membrane against the inner surface of the side wall of the container by means of the activating protrusions in their active positions to attach the membrane to the inner surface of the side wall; retracting the activating protrusions to their inactive positions; and subsequently withdrawing the applicator tool from the container. Advantages of this method are explained in relation to the embodiments of the applicator tool above.

In the following the invention will be explained in further detail by means of examples of embodiments with reference to the accompanying schematic drawings, in which
Fig. 1 is an exploded view of an applicator tool according to the invention showing a number of parts thereof,
Fig. 2 is a plan view of a membrane,
Fig. 3 is a perspective of an applicator tool according to the invention in an active position,
Fig. 4 is a top view of the applicator tool of Fig. 3,
Fig. 4A shows a section along line A-A in Fig 4,
Fig. 4B shows a section along line B-B in Fig 4,
Fig. 4C shows a section along line C-C in Fig 4,
Fig. 5 is a perspective of the applicator tool of Fig. 3 according to the invention in an inactive position,
Fig. 6 is a top view of the applicator tool of Fig. 5,
Fig. 6A shows a section along line A-A in Fig 6,
Fig. 6B shows a section along line B-B in Fig 6,
Fig. 6C shows a section along line C-C in Fig 6,
Fig. 7 is a sectional view showing the applicator tool of Figs. 3-6 in a position ready for inserting a membrane into a container, and
Fig. 8 is a view similar to Fig. 7 showing the applicator tool right after insertion of the membrane into the container.

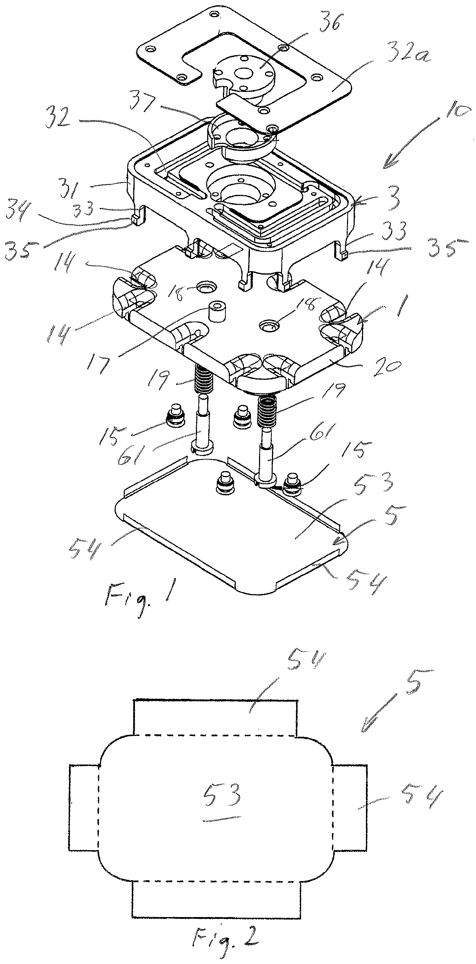

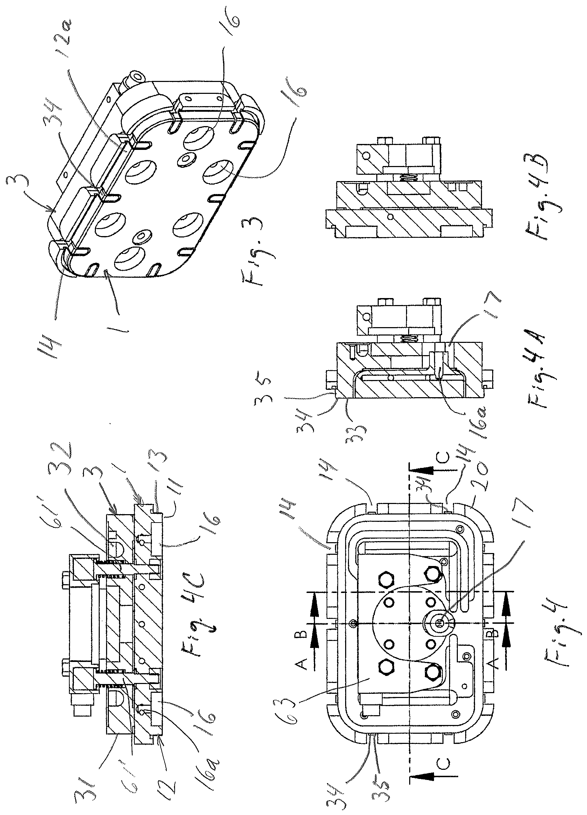

In the drawings Fig. 1 shows a first embodiment of the applicator tool 10 and Figs. 3-8 show a variant of said embodiment as will be explained.

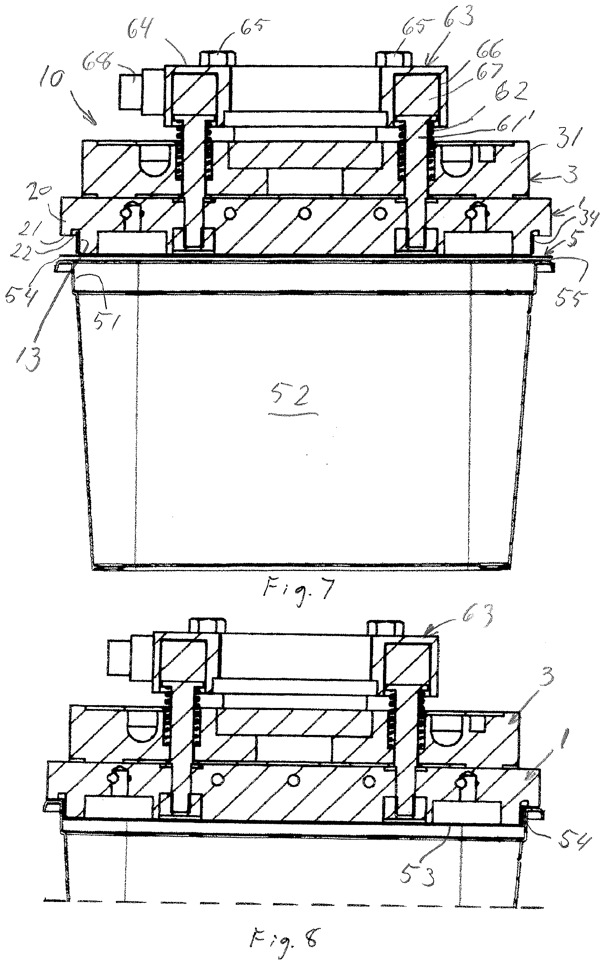

Directions up and down as used herein refers to the applicator tool 10 in a horizontal application position as shown in Figs. 7 and 8.

In the embodiments shown in Figs. 1 and 3-8 the applicator tool 10 comprises a bottom part 1 and an activating unit 3.

The bottom part 1 has a bottom surface 11 which, when the applicator tool 10 is in the horizontal application position, defines a bottom level. Adjacent the bottom surface 11 a lower portion 12 of the bottom part 1 comprises a circumferential surface 13 extending above the bottom level. The circumferential surface 13 is extending substantially perpendicular to the bottom surface 11 and the bottom level. Several circumferential recesses 14 are extending from the circumferential surface 13 into the bottom part 1. In the present embodiment ten such circumferential recesses 14 are present. The circumferential recesses 14 likewise extend from or open into other surfaces of the bottom part 1 than the circumferential surface 13, as seen in the figures. The bottom surface 11 and the circumferential surface 13, disregarding the circumferential recesses 14 and any other recesses, defines a convex surface 12a circumscribed about the bottom surface 11 and the circumferential surface 13, thus circumscribing a lower side of the lower portion 12.

As a means for releasably cohering a membrane 5 to the bottom surface 11, suction cups 15 are provided to be mounted in bottom recesses 16 extending into the bottom part 1 from the bottom surface 11. The suction cups 15 are intended for connection to a vacuum source (not shown), and accordingly the bottom part 1 comprises channels 16a and a connection 17 for connecting a controllable vacuum source to the suction cups 15 in a manner known per se to the skilled person.

In the embodiment(s) shown the activating unit 3 comprises a body 31 providing a heating element by virtue of channels 32 for accommodating an electrical heating coil (not shown). Fig. 1 further shows a cover 32a for the channels 32. The body 31 or heating element is made of a heat conductive material. Integral with the body 31 are a number of fingers 33 corresponding to the number of circumferential recesses 14, which in use accommodate the fingers 33. At lower ends the fingers 33 each comprises an activating protrusion 34 with a heat surface 35 the function of which shall be explained below. It is noted that the activating unit 3 including the body 31 and the fingers 33 is rigid, at least from a practical view. The body 31 being of a heat conductive material provides for conducting heat from the electrical heating coil in the channel 32 to the fingers 33 and the heat surfaces 35 of the activating protrusions 34 of the fingers 33.

For mounting the applicator tool 10 in a packaging machine, a connecting element 36 is connected to the body 31, an insulating part 37 being inserted between the connecting element 35 and the body 31 in order to insulate the connecting element 36 from heat. Through the connecting element 36 the applicator tool 10 may e.g. be attached to a robotic arm or another drive means of a packaging machine (not shown).

In an assembled state of the applicator tool 10, as e.g. shown in Figs. 3-8, the body 31 of the activating unit 3 and the bottom part 1 are mutually connected by bolts 61; 61' to be movable up and down relative to each other.

In the assembled state of the applicator tool 10, e.g. as shown in Figs. 3-8 the activating unit 3 is placed on top of the bottom part 1 and the two are fixed to each other by means of the bolts 61; 61'. The bolts 61; 61' are passed through one of the activating unit 3 and the bottom part 1 to be fixed in the other, but the bolts 61; 61' are not tight, and thus vertical movements of the two parts, the bottom part 1 and the activating unit 3, relative to each other between active and inactive positions, i.e. mutual positions of the activating unit 3 and the bottom part 1 in which the applicator tool 10 is active and inactive, respectively, regarding effecting attachment of a membrane e.g. by spot-welding, are possible. The fingers 33 are accommodated in the circumferential recesses 14 in the assembled state.

In the active position (see e.g. Figs 3 and 4) the body 31 of the activating unit 3 and the bottom part 1 are close together, the ends of the fingers 33 are more or less flush with the bottom surface 11, and the activating protrusions 34 are protruding slightly, but distinctly, from the convex surface 12a at least in at a level of the circumferential surface 13.

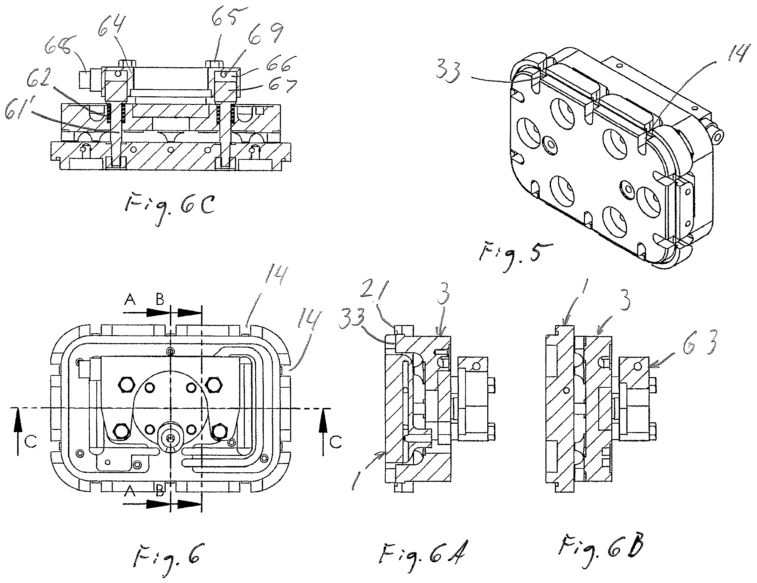

In the inactive position (see e.g. Figs. 5 and 6) the body 31 and the bottom part 1 are moved away from each other in the vertical direction to an extent allowed by the bolts 61; 61', and the activating protrusions 34 have, due to the rigidity of the activating unit 3, been moved in parallel to respective position above their positions in the active position relative to the bottom part 1.

A power means is provided to at least move the body 31 of the activating unit 3 up relative to the bottom part 1 as it shall be explained below.

In the embodiment shown in Fig. 1 the bolts 61 are inserted through holes 18 in the bottom part 1 to be fastened to the body 31 of the activating unit 3. Springs 19 should in the assembled applicator tool 10 be placed around the bolts 61 between the bottom part 1 and the body 31 to press these two parts away from each other though with at relatively light force, as will be explained below. Thus in the embodiment shown in Fig. 1 the springs 19 constitutes power means for moving the body 31 away from the bottom part 1. It should be noted that in this embodiment the heads of the bolts 61 should be countersunk into the bottom part 1 to a degree allowing the bottom part 1 to be lifted along the bolts 61 to the active position without the heads of the bolts protruding below the bottom surface 11.

In the embodiment shown in Figs. 3-8 the bolts 61' are inserted through the body 31 to be fastened to the bottom part 1. Second springs 62 are provided around the bolts 61' and between heads of these bolts 61' and the body 31 to press the body 31 towards the bottom part 1. To constitute a power means for moving the body 31 away from the bottom part 1 a pneumatic cylinder device 63 is provided. The pneumatic cylinder device 63 comprises a housing 64 mounted rigidly to the body 31 by screws 65, said housing 64 comprising two cylindrical spaces or recesses 66 each accommodating slidably a piston 67 attached to the head of either bolt 61'. The housing 64 further comprises a connector 68 for connecting a hose or the like for controllable supply of pressurized air, and channels 69 (see Fig. 6C) for distributing such air to the cylindrical spaces 66. Supplying pressurized air to the pneumatic cylinder device 63 results it the pistons 67 being pressed downwards thus pressing downwards the bolts 61' thereby moving the bottom part 1 away from the body 31. Further the second springs 62 are thereby compressed, as it is e.g. seen by comparison of Figs. 4C and 6C.

Adjacent the circumferential surface 13 a lateral protrusion 20 is provided having a lower surface 21. Between said lower surface 21 and the circumferential surface 13 a groove 22 is provided. The lateral protrusion 20 circumvents the bottom part 1, but is intersected by the circumferential recesses 14.

Fig. 2 shown an example of the membrane 5 to be attached to an inner surface of a side wall 51 of a container 52 as illustrated by Figs. 7 and 8, and as described in the above mentioned European patent application No. EP 15 199 255.9. The membrane comprises a centre portion 53 and four attachment wings 54 integrated with the centre portion 53.

In use the membrane 5 is placed centrally over an open top of the container 52 as shown in Fig. 7. The membrane 5 may be placed by any means, but preferably the membrane 5 is picked-up from a stock by abutting the bottom surface 11 against the outmost membrane of such stock, opening the connection between the suction cups 15 and the vacuum source to cohere the membrane to the bottom surface 11 by suction, and mowing the applicator tool 10 relative to the container 52 into the position shown in Fig. 7. To accomplish these movements of the applicator tool 10 and the container 52 the applicator tool 10 may be carried and moved by a robotic arm, or the like, and the container may be advanced on a conveyor, as it is known per se.

The container 52 comprises an upper edge 55 surrounding the open top.

From the position shown in Fig. 7 the applicator tool 10 is lowered into the position shown in Fig. 8 whereby the lower surface 21 of the lateral protrusion 20 abuts or rests on the upper edge 55 of the container 52 thus defining the mutual position of the applicator tool 10 and the container 52. Thereby the membrane 5 is pressed into the container 52 and the attachment wings 54 are folded to the configuration shown in Fig. 1 by contact against the upper edge 55 and the inner surface of the side wall 51 of the container 52. During this operation the bottom part 1 and the activating unit 3 are close together in their active position, the activating protrusions 34 protruding from the convex surface 13. Thus the activating protrusions 34 by means of their respective heat surface 35 urge the attachment wings 54 against the inner surface of the side wall 51 of the container 52 thereby spot-welding the attachment wings 54 to the inner surface of the side wall 51. After a short holding time to ensure the welding is effected, the activating unit 3 is raised from the bottom part 1 to the inactive position. Thereby the heat surfaces 35 of the activating protrusions 34 are removed or at least moved from the surface of the membrane 5 at the places of spot welding. In the exemplary embodiment, as shown in Figs. 5 and 6, the heat surfaces 35 are moved to positions right above or flush with the lower surface 21 of the lateral protrusion 20 and thus above the upper edge 55 of the container 52. Subsequently the applicator tool 10 is lifted from the container 52 and, due to the preceding removal or moving of the activating protrusions 34 and their heat surfaces 35, it is ascertained that the membrane 5 do not stick to the activating protrusions to be unintendedly torn from its position. Before the applicator tool 10 is lifted from the container the connection between the suction cups 15 and the vacuum source is disconnected to terminate the suction and release the coherence between the membrane 5 and the bottom part 1. Connection and disconnection of the vacuum source may be effected by any known means e.g. by means of a valve, as it is well known to the skilled person.

In the embodiment shown in Figs 3-8 the raising of the activating unit 3 from the bottom part 1 is accomplished by pressurizing the pneumatic cylinder device 63 whereby the bottom part 1 is pressed away from the activating unit 3, but since the position of the bottom part 1 is locked in the downwards vertical direction due to the lateral protrusion 20 resting on the upper edge 55 of the container 52 the activating unit 3 is lifted relative to the container 52. The skilled person will appreciate that the suspension of the activating unit 3 and thus of the applicator tool 10 by a robotic arm or other drive means should comprise a resiliency allowing the activating unit 3 to be raised.

After the applicator tool 10 in the embodiment shown in Figs 3-8 has been lifted from the container 52 the pneumatic cylinder device 63 may be depressurized to allow the second springs 62 to return the bottom part 1 and the activating unit 3 to the active position, whereafter the applicator tool 10 may be moved to the membrane stock to fetch another membrane to be attached to another container.

In the embodiment of Fig. 1 the raising of the activating unit 3 is accomplished by raising the activating unit 3 by means of the robotic arm or other drive means used to suspend the applicator tool 10, while the springs 19 will press the bottom part 1 downwards to stay in place in the container 52 until the inactive position of the bottom part 1 and the activating unit 3 has been reached and the bottom part 1 is lifted by action of the heads of the bolts 61.

After the applicator tool 10 in the embodiment shown in Fig. 1 has been lifted from the container 52 it may be moved to the membrane stock to fetch another membrane to be attached to another container. In this embodiment the bottom part 1 and the activating unit 3 are brought to their active position by the back-pressure of the membrane 5 when it is being pressed into the open top of a container. In order to allow the back-pressure of the membrane 5 to bring the bottom part 1 close to the activating unit 3, or vice versa, the springs 19 should exert a relatively light force, as mentioned above.

As used herein the term "activating protrusion" refers to the fact that the acitvating protrusion(s), in use, by abutment against the membrane activates the attachment, i.e. fixation, of the membrane to the inner surface of the side wal of the container Whereas above the activating protrusions has been described as having heat surfaces to provide for spot-welding by heating the membrane it should be understood other means than heat surfaces may be used for effecting attachment or welding of the membrane to the inner surface of the side wall of the container, as it will be known to the skilled person. Especially the material of the inner surface of the side wall of the container and the material of the surface of the membrane to be attached to the container may suggest alternative means for activating or effecting attachment or welding to the skilled person. Using heat surfaces, the temperature of the heat surfaces should be adapted to the materials to be welded and the holding time available. E.g. in case of the surfaces to be united or welded together comprising polypropylene with a melting point of approximately 180°C at a rate of applying 40 membranes to respective containers per minut the temperature of the body 31 of the activating unit 1 and the heat surfaces 35 may be approximately 200°C.

Though in the embodiment described above suction cups are used as a means for releasably cohering a membrane to the bottom part of the applicator tool other means will be envisaged to the skilled person.

Finally, though springs and pneumatic cylinders have in the examples been disclosed as power means for effecting movement of the activating protrusions between active and inactive position, or vice versa, other means for effecting such movements will be envisaged by the skilled person.

Accordingly, the above examples should be regarded as non-limiting to the scope of the invention.

## Claims

1. An applicator tool (10) for attaching a membrane (5) to an inner surface of a side wall (51) of a container (52) for a packaged dairy product, comprising:
a bottom part (1) with a bottom surface (11) for abutment against the membrane (5), said bottom surface (11) defining a bottom level when the applicator tool (10) is in a horizontal application position for attaching the membrane (5) to the inner surface of the side wall (51) of the container (52), the bottom part (1) having a circumferential surface (13) adjacent to the bottom surface (11), said circumferential surface (13) having an extent in a direction perpendicular to the bottom surface (11) and being positioned above said bottom level, when the applicator tool (10) is in said application position, the bottom surface (11) and the circumferential surface (13) together defining a convex surface (12a) circumscribed about the bottom surface (11) and the circumferential surface (13); and
a plurality of activating protrusions (34) respectively movable relative to the bottom part (1) between an active position in which the activating protrusions (34) protrude relative to the convex surface (12a) and an inactive position in which the activating protrusions (34) are retracted from their active positions.

2. An applicator tool according to claim 1, wherein the activating protrusions (34) in their inactive positions are retracted to locations above locations of the activating protrusions (34) in their active positions relative to the bottom part (1).

3. An applicator tool according to claim 1 or 2, wherein in the active position the activating protrusions (34) are protruding less than 2 mm, preferably less than 1 mm, from the convex surface (12a).

4. An applicator tool according to any one of the preceding claims, wherein the activating protrusions (34) in their respective active position are located above said bottom level when the applicator tool (10) is in said application position.

5. An applicator tool according to any one of the preceding claims, wherein the activating protrusions (34) are parts of an activating unit (3), which is movable relative to the bottom part (1) in a direction perpendicular to said bottom surface (11).

6. An applicator tool according to any one of the preceding claims, comprising a power means (19; 63) for effecting movement of the activating protrusions (34) in at least one direction between their respective active position and their respective inactive position.

7. An applicator tool according to claim 5, wherein a power means (19; 63) for effecting movement of the activating protrusions (34) in at least one direction between their respective active position and their respective inactive position is present between the activating unit (3) and the bottom part (1) for at least moving the activating unit (3) away from the bottom part (1).

8. An applicator tool according to claim 5 or 7, wherein the activating unit (3) including the activating protrusion (34) is substantially rigid.

9. An applicator tool according to any one of the preceding claims, comprising means (15) for releasably cohering the membrane to the bottom surface (11).

10. An applicator tool according to claim 9, wherein the means for releasably cohering the membrane to the bottom surface comprise at least one suction device (15).

11. An applicator tool according to claim 10, wherein the at least one suction device comprises a connection (17) for connecting a vacuum source.

12. An applicator tool according to any one of the preceding claims, wherein the activating protrusions (34) respectively comprise a heat surface (35) for abutment against the membrane (5).

13. An applicator tool according to claim 12, comprising a heating element (31, 33) conducting heat to the heat surfaces (35) of the activating protrusions.

14. An applicator tool according to any one of the preceding claims, wherein the bottom part (1) comprises a lateral protrusion (20) adjacent the circumferential surface (13) for abutment on an upper edge (55) of the container (52).

15. A method of attaching a membrane to an inner surface of a side wall of a container for a packaged dairy product by means of an applicator tool according to any one of the preceding claims, comprising:
contacting a membrane with the bottom surface of the bottom part;
inserting the membrane into the container to a position adjacent the inner surface of the sidewall of the container;
pressing circumferential parts of the membrane against said inner surface by means of the activating protrusions in their active positions to attach the membrane to the inner surface of the side wall;
retracting the activating protrusions to their inactive positions; and
subsequently withdrawing the applicator tool from the container.
